# EUROPÄISCHE PATENTSCHRIFT

(11) **EP 0 492 073 B1**
(45) Veröffentlichungstag und Bekanntmachung des Hinweises auf die Patenterteilung: **31.08.1994**
(21) Anmeldenummer: 91117279.9
(22) Anmeldetag: 10.10.1991
(51) Int. Cl.: C03B 37/012

(54) **Verfahren zum Herstellen einer Lichtwellenleiter Vorform**
Process for fabricating an optical waveguide preform
Procédé pour fabriquer une preforme pour guide optique

(30) Priorität: 21.12.1990 DE 4041153; 21.12.1990 DE 4041152
(43) Veröffentlichungstag der Anmeldung: 01.07.1992
(73) Patentinhaber: kabelmetal electro GmbH, 30002 Hannover (DE); ALCATEL N.V., NL-1077 XX Amsterdam (NL)
(72) Erfinder: Weber, Dieter, Dr., W-7014 Kornwestheim (DE)

(56) Entgegenhaltungen:
- EP-A- 0 254 266
- ELECTRICAL COMMUNICATION. Bd. 59, Nr. 4, 1985, BRUSSELS BE Seiten 396 - 400; R.DORN: 'Mechanically Shaped Preforms for Optical Fiber Production'
- JOURNAL OF OPTICAL COMMUNICATIONS. Bd. 10, Nr. 1, März 1989, BERLIN DE Seiten 2- 5; R. DORN ET AL: 'Mechanical Shaping of Preforms for Low Loss at Low Cost'
- ELEKTRISCHES NACHRICHTENWESEN Bd. 62, Nr. 3/4, 1988, STUTTGART,DE Seiten 235 -
- 241; R. DORN ET AL: 'Technologien zur Herstellung von Vorformen fürLichtleitfasern'

## Beschreibung

Die Anmeldung betrifft ein Verfahren zum Herstellen einer Lichtwellenleiter-Vorform, bei dem die Mantelschicht als eine rohrförmige Pulverschicht auf einen zylindrischen Kernstab aus Glas aufgebracht und durch Erhitzen in einem isothermen Temperaturfeld stabilisiert wird. Die Sinterung der Pulverschicht zum Mantel erfolgt schließlich bei Temperaturen von über 1250° C.

Ein solches Verfahren ist unter dem Namen MSP-Verfahren (MSP-Mechanically Shaping of Preforms) bekannt (Aufsatz: "Technologien zur Herstellung von Vorformen für Lichtleitfasern" in Elektrisches Nachrichtenwesen Heft 3/4, 1988). Nachdem mit den heute bekannten Verfahren Lichtwellenleiter aus Glas in einer solchen Qualität hergestellt werden können, welche bei den verwirklichten Dämpfungswerten die theoretisch mögliche Grenze nahezu erreicht hat, wird nunmehr an der Reduzierung der Herstellungskosten intensiv gearbeitet. Dazu gehören auch die Bestrebungen, die auf eine Vergrößerung der Vorformen zielen, aus denen Lichtwellenleiter großer Länge an einem Stück hergestellt werden können. Aus einer Vorform mit 55 mm Enddurchmesser und einer Länge von 50 cm kann ein Lichtwellenleiter von 100 km Länge gezogen werden.

Wenn bei der Herstellung von Vorformen nach dem MSP-Verfahren die aus Oxidpulver bestehende Mantelschicht mit einer Ausgangsschüttdichte von 5 - 15 % durch Temperatureinwirkung auf mindestens 25 % seiner endgültigen Dichte (= 100 % Dichte = Dichte des fertig gesinterten Mantels aus Glas) stabilisiert wird, hat sich ergeben, daß sich der entstandene Körper verbiegt und zerreißt. Diese Zerstörung der halbfertigen Vorform ist offenbar auf ein in nachteiliger Weise auftretendes Gegeneinanderwirken von Kern und entstehendem Mantel zurückzuführen.

Die stabilisierte Mantelschicht muß rißfrei sein, damit die aus ihr gesinterte, glasige Mantelschicht ebenfalls rißfrei ist und aus der fertigen Lichtwellenleiter-Vorform gezogene Lichtwellenleiter keine Dämpfungserhöhung aufweisen.

Da die pulverige bzw. stark poröse Mantelschicht während der Stabilisierung sowohl radial als auch axial sehr stark schrumpft, muß sichergestellt werden, daß die rohrförmige Mantelschicht auf dem Kernstab gleiten kann. Falls dies nicht erreicht wird, klebt die Mantelschicht auf dem Kernstab fest und die entstehende Lichtwellenleiter-Vorform zerreißt.

Die während der Stabilisierung noch poröse Mantelschicht enthält noch einige Stoffe, welche die Lichtleitung im fertigen Lichtwellenleiter stören würden, wenn sie nicht während des Stabilisierungsvorganges oder später entfernt würden.

Das der Erfindung zugrundeliegende technische Problem besteht darin, das Stabilisierungsverfahren in der Weise zu gestalten, daß in der stabilisierten Mantelschicht keine Risse entstehen, damit die entstehende Lichtwellenleiter-Vorform nicht zerreißt.

Außerdem soll die Möglichkeit erhalten bleiben, während der Stabilisierung wengistens einen Teil der in der porösen Mantelschicht enthaltenden Verunreinigungen und unerwünschten Elemente entfernen zu können.

Dieses technische Problem ist erfindungsgemäß dadurch gelöst, daß die Pulverschicht langsam bis auf ca. 150° C erhitzt wird, danach die Temperatur mit einer höheren Geschwindigkeit stetig auf 1150° bis 1200° C erhöht und die Endtemperatur längere Zeit aufrechterhalten wird.

Wenn in dieser Weise beim Stabilisieren der Mantelschicht verfahren wird, dann sind die Adhäsionskräfte zwischen den Teilchen in der porösen Mantelschicht größer als die Adhäsionskraft zwischen dem gläsernen Kernstab und der Mantelschicht. Deshalb kann die poröse Mantelschicht auf dem Kernstab gleiten, während sie sowohl radial als auch axial nahezu isotrop verdichtet wird. Um dabei sicherzustellen, daß sich während des Stabilisierens der aus Oxidpulver bestehenden Mantelschicht diese nicht verformt, erfolgt nach einem weiteren Erfindungsgedanken die Verdichtung in einem eine isotherme Temperaturverteilung aufweisenden Raum bei einer Höchsttemperatur von ca. 1200° C auf eine relative Dichte von 25 bis 50 %.

Wenn das Stabilisieren der Mantelschicht in einem Raum mit isothermer Temperaturverteilung erfolgt, dann befinden sich der Kern und die Mantelschicht im wesentlichen auf der gleichen Temperatur.

Beim Stabilisieren, welches gleichzeitig mit dem Vortrocknen der Pulverschicht in einer Heliumatmosphäre bei einer Maximaltemperatur von knapp 1200° C durchgeführt wird, schrumpft die poröse Mantelschicht in axialer Richtung, indem sie auf dem Kernstab entlanggleitet. Der Kernstab verändert dabei seine Form nicht wesentlich. Das Schrumpfen der porösen Mantelschicht verläuft nahezu isotrop. Vorteilhafte Ausgestaltungen der Erfindung sind in den Ansprüchen 3 bis 5 enthalten.

Das erfindungsgemäße Verfahren läuft beispielsweise in folgender Weise ab:
Ein Glasrohr mit 15 cm Innendurchmesser, 110 cm Länge und einem koaxial in ihm angeordneten Kernstab aus Glas mit 8 mm Durchmesser wird mit SiO₂-Pulver bis zu einer relativen Dichte von 5 % gefüllt. Das Verhältnis von Manteldurchmesser zu Kerndurchmesser der fertigen Lichtwellenleiter-Vorform soll 2,5 und die Differenz in den Berechnungsindizes soll 5,0 x 10⁻³ betragen.

In einem Ofen mit isothermem Temperaturfeld wird die vorstehend beschriebene Anordnung in der erfindungsgemäßen Weise von 30° C bis auf maximal 1180° C erhitzt. Die Erwärmung erfolgt stetig, wobei im ersten Verfahrensabschnitt bis etwa 150° C die Aufheizgeschwindigkeit 0,5° C/min beträgt, welche ab 150° C auf 2° C/min erhöht wird. Die Spitzentemperatur von 1180° C wird 3 Stunden lang aufrechterhalten.

Das bei diesem Verfahren erzeugte Produkt ist eine rißfreie, geometrisch gleichmäßige Lichtwellenleiter-Vorform mit 50 % relativer Dichte der Mantelschicht, einem Durchmesser der Mantelschicht von 66 cm bei einer Länge von 50 cm. Die Mantelschicht ist während der Stabilisierung nahezu isotrop geschrumpft. In radialer Richtung war die Schrumpfung geringfügig, d. h. um etwa 5 % größer.

Die auf diese Weise erzeugte Lichtwellenleiter-Vorform kann anschließend, ggf. nach Durchführung weiterer Behandlungsverfahren, beispielsweise zur Entfernung von Verunreinigungen, in einem Sinterofen mit einem Gradienten-Temperaturfeld mit einem Temperaturgradienten von 100° C/cm bei 1530° C gesintert werden. Diese Lichtwellenleiter-Vorform reicht für einen Lichtwellenleiter von 100 km Länge.

Bei den in der porösen Mantelschicht enthaltenen Verunreinigungen handelt es sich um physikalisch oder chemisch gebundenes Wasser, Chloride, wie Germaniumchlorid, und Eisenverbindungen. Diese die Lichtleitung im Lichtwellenleiter störenden Stoffe müssen entweder während des Stabilisierungsverfahrens oder bei einem nachfolgenden Chlorierungsverfahren entfernt werden.

Beim Stabilisierungsverfahren wird als Spülgas vorzugsweise Helium verwendet. Dieses Gas ist chemisch inert, besitzt eine hohe Wärmeleitfähigkeit und diffundiert leicht durch Glas. Wenn dem Helium eine geringe Menge Sauerstoff beigemischt ist, wird die Entfernung von Kohlenwasserstoffen erleichtert.

## Patentansprüche

1. Verfahren zum Herstellen einer Lichtwellenleiter-Vorform, bei dem die Mantelschicht als eine rohrförmige Pulverschicht auf einen zylindrischen Kernstab auf Glas aufgebracht und durch Erhitzen in einem isothermen Temperaturfeld stabilisiert und schließlich bei Temperaturen von über 1250° C zum Mantel gesintert wird, dadurch gekennzeichnet, daß die Pulverschicht langsam bis auf ca. 150° C erhitzt wird, danach die Temperatur mit einer höheren Geschwindigkeit stetig auf 1150° bis 1200° C erhöht und die Endtemperatur längere Zeit aufrechterhalten wird.

2. Verfahren zur Herstellung einer Lichtwellenleiter-Vorform, bei dem die Mantelschicht des Lichtwellenleiters als Pulver auf einen Kernstab aufgebracht, bei einer sehr hohen Temperatur stabilisiert und schließlich bei Temperaturen von über 1250° C zum Mantel gesintert wird, dadurch gekennzeichnet, daß die Verdichtung in einem eine isotherme Temperaturverteilung aufweisenden Raum, bei einer Höchsttemperatur von ca. 1200° C auf eine relative Dichte von wenigstens 25 % erfolgt.

3. Verfahren nach Anspruch 1 oder2, dadurch gekennzeichnet, daß die Pulverschicht auf eine relative Dichte von 25 - 50 % verdichtet wird.

4. Verfahren nach Anspruch 1 oder einem der folgenden, dadurch gekennzeichnet, daß die Pulverschicht von Helium um- bzw. durchspült wird.

5. Verfahren nach Anspruch 4, dadurch gekennzeichnet, daß dem Helium ein geringer Anteil, höchstens jedoch 10 Vol % Sauerstoff, beigemischt ist.

## Claims

1. Process for the production of an optical waveguide preform, in which process the sheathing layer is applied in the form of a tubular powder layer to a cylindrical core rod of glass and is stabilized by heating in an isothermal temperature field and finally is sintered to the sheath at temperatures of over 1250°C, characterized in that the powder layer is slowly heated to approximately 150°C, thereafter the temperature is steadily raised at a greater rate to 1150° to 1200°C, and the final temperature is maintained for a relatively long time.

2. Process for the production of an optical waveguide preform, in which process the sheath layer of the optical waveguide is applied in the form of powder to a core rod, is stabilized at a very high temperature and finally is sintered to the sheath at temperatures of over 1250°C, characterized in that the compaction takes place in a space exhibiting an isothermal temperature distribution, at a maximum temperature of approximately 1200°C, to a relative density of at least 25 %.

3. Process according to Claim 1 or 2, characterized in that the powder layer is compacted to a relative density of 25 - 50 %.

4. Process according to Claim 1 or one of the following claims, characterized in that helium is employed to wash around or through the powder layer.

5. Process according to Claim 4, characterized in that a small proportion, but at most 10 % by volume of oxygen, is admixed with the helium.

## Revendications

1. Procédé de fabrication d'une préforme pour guide optique, dans le cas duquel on rapporte la couche qui formera la gaine optique sous forme d'une couche pulvérulente tubulaire sur un barreau de verre cylindrique formant le coeur et on la stabilise par chauffage dans un champ de température isotherme et enfin on la fritte à des températures supérieures à 1250°C pour former la gaine optique, caractérisé par le fait que l'on chauffe lentement la couche pulvérulente jusqu'à environ 150°C, puis que l'on augmente la température en continu à une vitesse plus élevée jusqu'à 1150° à 1200°C et que l'on maitient assez longtemps la température finale.

2. Procédé de fabrication d'une préforme pour guide optique dans le cas duquel on rapporte la couche du guide optique qui formera la gaine optique sous forme d'une poudre sur un barreau formant le coeur, qu'on la stabilise à température très élevée et qu'enfin on la fritte à des températures supérieures à 1250°C pour donner la gaine optique, caractérisé par le fait que l'agglomération se fait dans un espace présentant une répartition isotherme de la température, à une température maximale d'environ 1200°C, pour obtenir une densité relative d'au moins 25%.

3. Procédé selon la revendication 1 ou 2, caractérisé par le fait que l'on agglomère la couche pulvérulente pour obtenir une densité relative de 25 - 50%.

4. Procédé selon la revendication 1 ou l'une des suivantes, caractérisé par le fait que l'on fait passer autour et à travers la couche pulvérulente de l'hélium de rinçage.

5. Procédé selon la revendication 4, caractérisé par le fait qu'à l'hélium est mélangée une faible proportion, au maximum 10% en volume d'oxygène.
